# EUROPÄISCHE PATENTSCHRIFT

(11) **EP 1 776 627 B1**
(45) Veröffentlichungstag und Bekanntmachung des Hinweises auf die Patenterteilung: **23.01.2008**
(21) Anmeldenummer: 05766780.0
(22) Anmeldetag: 18.07.2005
(51) Int. Cl.: G05D 7/00

(54) **EINRICHTUNG UND VERFAHREN ZUM STEUERN DER STRÖMUNGSGESCHWINDIGKEIT EINER FLÜSSIGKEITSSTRÖMUNG IN EINER HYDRAULIKLEITUNG**
DEVICE AND METHOD FOR CONTROLLING THE FLOW SPEED OF A LIQUID FLOW IN A HYDRAULIC LINE
DISPOSITIF ET PROCEDE POUR COMMANDER LA VITESSE D'ECOULEMENT D'UN FLUX DE LIQUIDE DANS UNE CONDUITE HYDRAULIQUE

(30) Priorität: 03.08.2004 DE 102004037537
(43) Veröffentlichungstag der Anmeldung: 25.04.2007
(73) Patentinhaber: ROBERT BOSCH GMBH, 70442 Stuttgart (DE)
(72) Erfinder: IBEN, Uwe, 70839 Gerlingen (DE); HABR, Klaus, 70435 Stuttgart (DE)
(86) Internationale Anmeldenummer: PCT/EP2005/053463
(87) Internationale Veröffentlichungsnummer: WO 2006/013153

(56) Entgegenhaltungen:
- DE-A1- 2 061 233
- US-A- 3 014 709
- US-A- 4 234 008
- GRAFTEL, INC. LABORATORY ACCREDITATION BUREAU: "Sonic Nozzle and Sonic Choke Calibration and manufacturing services" CALIBRATIONLABS.COM, [Online] XP002356613 Elk Grove Village, IL, USA Gefunden im Internet: URL:http://www.calibrationlabs.com/sonic_n ozzles_and_sonic_chokes.htm> [gefunden am 2005-11-29]

## Beschreibung

### Stand der Technik

Die Erfindung betrifft eine Einrichtung sowie eine Vorrichtung zum Steuern der Strömungsgeschwindigkeit einer Flüssigkeitsströmung in einer Hydraulikleitung.

Bei einer Vielzahl von Anwendungen ist es erforderlich, die Geschwindigkeit einer Flüssigkeitsströmung innerhalb einer Hydraulikleitung zu steuern, beispielsweise um eine gewünschte Strömungsgeschwindigkeit einzustellen und/oder um unerwünschte Druckpulsationen zu eliminieren oder zumindest zu glätten und/oder um Druckpulsationen zumindest in einer Strömungsrichtung zu reflektieren. Hydrauliksysteme, in denen die Strömungsgeschwindigkeit in dieser Art gesteuert werden muss, sind unter anderem auch in Kraftfahrzeugen vorhanden, wie z. B. ein Kraftstoffeinspritzsystem, ein Servolenkungssystem und ein Bremssystem. Bei diesen hochdynamischen Systemen ist insbesondere die Eliminierung oder Glättung von Druckpulsationen von besonderer Bedeutung.

Herkömmliche Steuereinrichtungen, wie z. B. Steuerventile arbeiten mit einer Veränderung der internen strömungsmechanisch wirksamen Geometrie. Mit anderen Worten, ein derartiges Steuerventil enthält ein Ventilglied, das zumindest zwischen zwei Stellungen verstellbar ist. Ein herkömmliches Steuerventil enthält daher zumindest eine körperlich verstellbare Komponente. Bei hochdynamischen Prozessen ist ein herkömmliches Steuerventil mit einer derartigen Mechanik hohen Verschleißerscheinungen ausgesetzt.

Aus der DE 20 61 233 A1 ist es bekannt, bei einem System, in dem Druckschwankungen von zwei verschiedenen Stellen aus erzeugt werden, eine gegenseitige Beeinflussung dadurch zu reduzieren, dass in einer die beiden Stellen miteinander verbindenden Leitung eine Drosselstelle vorgesehen wird, deren engster Querschnitt so dimensioniert ist, dass sich dort Schallgeschwindigkeit einstellt.

Vorteile der Erfindung

Die erfindungsgemäße Steuereinrichtung mit den Merkmalen des Anspruchs 1 bzw. das erfindungsgemäße Steuerverfahren mit den Merkmalen des Anspruchs 10 haben demgegenüber den Vorteil, dass zur Steuerung der Strömungsgeschwindigkeit keine Mechanik erforderlich ist, das heißt, es werden keine körperlich bewegten Komponenten benötigt. In der Folge arbeitet die Erfindung quasi verschleißfrei. Des Weiteren benötigt ein erfindungsgemäßes Ventil keine beweglichen Teile, so dass extrem kurze Schaltzeiten realisierbar sind. Die sich daraus ergebenden Vorteile für die Steuereinrichtung und für ein damit ausgestattetes Hydrauliksystem liegen auf der Hand.

Die vorliegende Erfindung beruht auf dem allgemeinen Gedanken, in einem dafür vorgesehenen Leitungsabschnitt ein homogenes Zwei-Phasen-Gemisch in der Flüssigkeit zu erzeugen und die jeweils gewünschte Strömungsgeschwindigkeit durch eine Variation des Massenanteils der Gasphase im Zwei-Phasen-Gemisch einzustellen. Die Erfindung nutzt dabei die Erkenntnis, dass innerhalb eines homogenen Zwei-Phasen-Gemischs die Schallgeschwindigkeit eine starke Abhängigkeit vom Massenanteil der Gasphase aufweist, so dass bereits sehr kleine Massenanteile der Gasphase ausreichen können, die Schallgeschwindigkeit des Zwei-Phasen-Gemischs deutlich abzusenken. Beispielsweise sinkt in einem Wasser-Wasserdampf-Gemisch die Schallgeschwindigkeit von etwa 1.400 m/s bei fehlender Gasphase auf etwa 16 m/s bei einem Massenanteil der Gasphase von etwa 10⁻³. Wichtig für die Erfindung ist des Weiteren die Überlegung, dass die Schallgeschwindigkeit des Zwei-Phasen-Gemisch quasi die maximal erreichbare Strömungsgeschwindigkeit repräsentiert, da Überschallströmungen zu extrem hohen Stoßverlusten führen.

Um mit Hilfe der erfindungsgemäßen Steuereinrichtung eine gewünschte Strömungsgeschwindigkeit einzustellen, wird somit gezielt ein Zwei-Phasen-Gemisch erzeugt, bei dem der Massenanteil der Gasphase so gewählt ist, dass die resultierende Schallgeschwindigkeit des Zwei-Phasen-Gemisch der gewünschten einzustellenden Strömungsgeschwindigkeit entspricht.

Des Weiteren kann eine derartige Steuereinrichtung besonders einfach zur Eliminierung oder zumindest zur Glättung von Druckpulsationen genutzt werden. Denn durch den Massenanteil der Gasphase im Zwei-Phasen-Gemisch wird über die daraus resultierende Schallgeschwindigkeit des Zwei-Phasen-Gemischs eine maximal zulässige Strömungsgeschwindigkeit durch den Leitungsabschnitt der Steuereinrichtung definiert. Subsonische Strömungsgeschwindigkeiten können somit den Leitungsabschnitt quasi ungedämpft passieren, während supersonische Strömungsgeschwindigkeiten durch die extrem hohen Stoßverluste stark gedämpft, also deutlich geglättet werden können. Da Druckpulse lokal eine überhöhte Geschwindigkeit aufweisen, ergibt sich die gewünschte Glättung bzw. Eliminierung.

Zweckmäßig kann der Leitungsabschnitt eine definierte Querschnittsverengung aufweisen oder bildet selbst innerhalb der Hydraulikleitung eine definierte Querschnittsverengung. Mit Hilfe einer derartigen Querschnittsverengung kann innerhalb der Hydraulikleitung im Bereich der Steuereinrichtung lokal die Strömungsgeschwindigkeit in der Flüssigkeitsströmung erhöht werden, um dadurch auch bei niedrigeren Strömungsgeschwindigkeiten zu der übrigen Hydraulikleitung rascher in den Bereich der Schallgeschwindigkeit des Zwei-Phasen-Gemischs zu kommen. Auf diese Weise kann die Steuereinrichtung vorteilhaft an den vorgesehenen Regelbereich adaptiert werden.

Zweckmäßig wird bei einer Weiterbildung das Zwei-Phasen-Gemisch im Bereich der Querschnittsverengung erzeugt, um unabhängig von der Strömungsrichtung die Strömungsgeschwindigkeit einstellen zu können.

Bei einer anderen Ausführungsform kann der Leitungsabschnitt benachbart zur Querschnittsverengung eine Zwei-Phasen-Zone mit erweitertem Querschnitt aufweisen, wobei dann das Zwei-Phasen-Gemisch im Bereich dieser Zwei-Phasen-Zone erzeugt wird. Bei einer derartigen Ausführungsform ist die Steuerung der Strömungsgeschwindigkeit abhängig von der aktuellen Strömungsrichtung. Zunächst definiert der Massengehalt der Gasphase die maximal einstellbare Strömungsgeschwindigkeit. Wenn sich nun die Zwei-Phasen-Zone stromab der Querschnittsverengung befindet, können sich innerhalb der Querschnittsverengung durchaus Geschwindigkeiten einstellen, welche die Schallgeschwindigkeit des Zwei-Phasen-Gemischs übersteigen. Befindet sich jedoch die Zwei-Phasen-Zone stromauf der Querschnittsverengung, bewirkt die Flüssigkeitsströmung, dass sich das Zwei-Phasen-Gemisch auch bis in die Querschnittsverengung erstreckt. Da dort höhere Geschwindigkeiten vorliegen, wird die Schallgeschwindigkeit des Zwei-Phasen-Gemischs sehr viel früher erreicht, so dass die Steuereinrichtung in dieser Strömungsrichtung bereits bei niedrigeren Strömungsgeschwindigkeiten innerhalb der übrigen Hydraulikleitung sperrt bzw. dämpft. Mit Hilfe einer derartigen Ausführungsform kann insbesondere eine richtungsabhängige Reflexion von Druckpulsationen erreicht werden.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

### Zeichnungen

Ausführungsbeispiele der Erfindung sind in den Zeichnungen dargestellt und werden im folgenden näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Prinzipdarstellung einer Einrichtung nach der Erfindung in einem halben Längsschnitt,
- Fig. 2: eine Ansicht wie in Fig. 2, jedoch bei einer anderen Ausführungsform,
- Fig. 3: eine schaltplanartige Prinzipdarstellung einer bevorzugten Anwendungsform der erfindungsgemäßen Einrichtung.

### Beschreibung der Ausführungsbeispiele

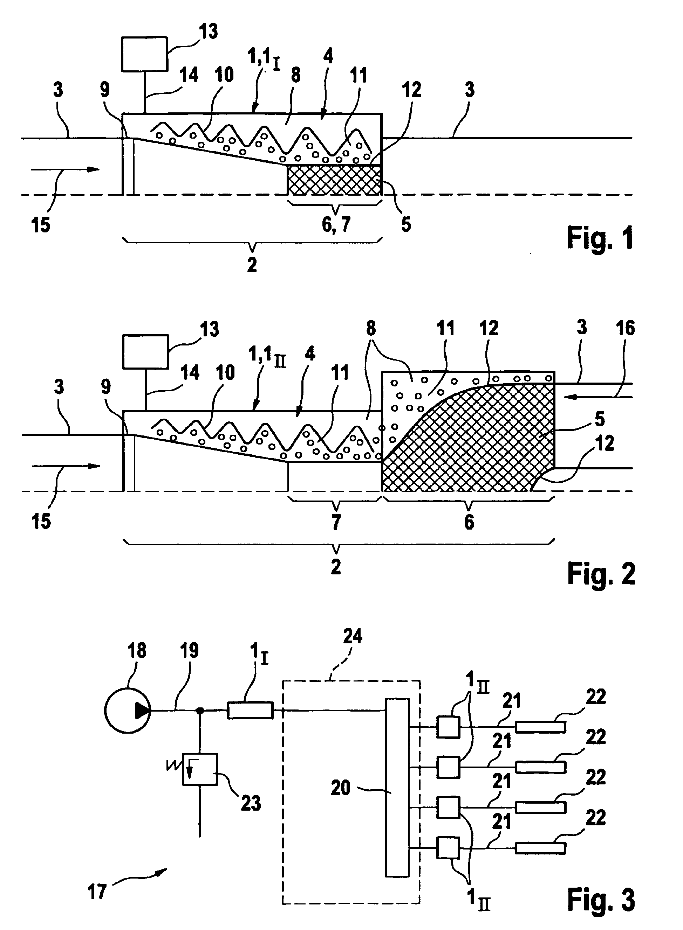

Entsprechend Fig. 1 und 2 enthält eine erfindungsgemäße Steuereinrichtung 1 einen Leitungsabschnitt 2, der von einer Flüssigkeit durchströmbar ist und in den Figuren durch eine geschweifte Klammer gekennzeichnet ist. Im eingebauten Zustand ist die Steuereinrichtung 1 in eine Hydraulikleitung 3 eingebunden, das heißt, der Leitungsabschnitt 2 bildet einen Abschnitt der Hydraulikleitung 3, so dass die in der Hydraulikleitung 3 transportierte Flüssigkeit auch den Leitungsabschnitt 2 durchströmt.

Die Steuereinrichtung 1 ist außerdem mit einer Erzeugeranordnung 4 ausgestattet, die es ermöglicht, im Leitungsabschnitt 2 in der Flüssigkeit ein homogenes Zwei-Phasen-Gemisch zu erzeugen. Das im Betrieb von der Erzeugeranordnung 4 gebildete Zwei-Phasen-Gemisch ist in den Figuren durch eine Kreuzschraffur symbolisiert und mit 5 bezeichnet Auf diese Weise wird im Betrieb der Erzeugeranordnung 4 innerhalb des Leitungsabschnitts 2 eine Zwei-Phasen-Zone 6 gebildet, in der das Zwei-Phasen-Gemisch 5 vorliegt und die in den Figuren durch eine geschweifte Klammer gekennzeichnet und mit 6 bezeichnet ist

Zweckmäßig bildet der Leitungsabschnitt 2 innerhalb der Hydraulikleitung 3 eine definierte Querschnittsverengung. Bei den hier gezeigten Ausführungsformen ist der Leitungsabschnitt 2 zu diesem Zweck mit einer definierten Querschnittsverengung 7 ausgestattet, die ebenfalls durch eine geschweifte Klammer gekennzeichnet ist. Dabei fallt die Querschnittsverengung 7 bei der Ausführungsform gemäß Fig. 1 mit der Zwei-Phasen-Zone 6 zusammen. Das bedeutet, dass die Erzeugeranordnung 4 bei dieser Ausführungsform das Zwei-Phasen-Gemisch 5 im Bereich der Querschnittsverengung 7 erzeugt. Im Unterschied dazu sind bei der Ausführungsform gemäß Fig. 2 die Zwei-Phasen-Zone 6 und die Querschnittsverengung 7 bezüglich der Strömungsrichtung zueinander benachbart angeordnet. In diesem Fall besitzt die Zwei-Phasen-Zone 6 einen gegenüber der Querschnittsverengung 7 erweiterten Querschnitt.

Das homogene Zwei-Phasen-Gemisch 5 kann grundsätzlich auf beliebige Art und Weise im Bereich der Zwei-Phasen-Zone 6 erzeugt werden. Die nachfolgend erläuterten Ausführungsformen sind daher rein beispielhaft und ohne Beschränkung der Allgemeinheit

Zweckmäßig ist eine Ausführungsform, bei der die Erzeugeranordnung 4 die Gasphase des Zwei-Phasen-Gemischs 5 direkt aus der Flüssigphase der in der Hydraulikleitung 3 transportierten Flüssigkeitsströmung erzeugen kann. Beispielsweise kann die Erzeugeranordnung 4 in der Zwei-Phasen-Zone 6 die Flüssigkeit zur Erzeugung der Gasphase anregen, beispielsweise durch eine entsprechende Beaufschlagung mit Ultraschall oder Mikrowellen. Die Gasphase wird dabei unmittelbar in der Flüssigphase generiert, so dass das homogene Zwei-Phasen-Gemisch 5 direkt in der Flüssigkeitsströmung erzeugt wird.

Alternativ kann zunächst ein Teilstrom der Flüssigkeit abgezweigt werden, der dann zur Erzeugung der Gasphase verdampft wird, wobei die so erzeugte Gasphase dann in die Flüssigphase rückgeführt wird, um das homogene Zwei-Phasen-Gemisch 5 zu erzeugen.

Entsprechend den Fig. 1 und 2 kann die Erzeugeranordnung 4 beispielsweise eine Bypasskammer 8 aufweisen, die über einen Bypass 9 mit dem Leitungsabschnitt 2 kommuniziert. Bei durchströmtem Leitungsabschnitt 2 kann somit über den Bypass 9 ein Teilstrom abgezweigt werden. Des Weiteren umfasst die Erzeugeranordnung 4 eine Heizeinrichtung 10, mit deren Hilfe die in die Bypasskammer 8 eingebrachte Flüssigphase durch Erwärmung in die Gasphase umgewandelt werden kann. Beispielsweise handelt es sich bei der Heizeinrichtung 10 um eine Widerstandsheizung, z. B. in Form einer Heizwendel oder dgl., die im Bypassraum 8 angeordnet ist. Alternativ kann die Heizeinrichtung z. B. auch mit Mikrowellen, Ultraschallwellen und/oder Infrarotwellen arbeiten. Die von der Heizeinrichtung 10 erzeugte Gasphase ist in den Fig. 1 und 2 durch kleine Kreise symbolisiert und mit 11 bezeichnet.

Damit die Erzeugemnordnung 4 die generierte Gasphase 11 in die Zwei-Phasen-Zone 6 zur Erzeugung des homogenen Zwei-Phasen-Gemischs 5 einbringen kann, ist der Leitungsabschnitt 2 bei den hier gezeigten Ausführungsformen im Bereich der Zwei-Phasen-Zone 6 mit einer gasdurchlässigen Wandung 12 ausgestattet. Bei einem entsprechenden Gasdruck in der Bypasskammer 8 kann die Gasphase 11 die gasdurchlässige Wandung 12 durchdringen, wodurch in der Zwei-Phasen-Zone 6 das Zwei-Phasen-Gemisch 5 entsteht. Durch eine geeignete Gestaltung der gasdurchlässigen Wand 12 und/oder Strömungsführung innerhalb der Zwei-Phasen-Zone 6 kann dabei erforderliche Homogenität des Zwei-Phasen-Gemischs 5 erreicht werden. Die Wandung 12 kann beispielsweise dadurch gasdurchlässig ausgestaltet sein, dass sie perforiert oder porös ist. Beispielsweise besteht die Wandung aus einem porösen Keramikmaterial oder aus einer für Gas durchlässigen und für Flüssigkeit undurchlässigen Membran.

Die erfindungsgemäße Steuereinrichtung 1 dient zur Steuerung der Strömungsgeschwindigkeit einer Flüssigkeitsströmung in der Hydraulikleitung 3. Da der Leitungsabschnitt 2 innerhalb der Hydraulikleitung 3 die Querschnittsverengung 7 bildet bzw. enthält, ist der Ort der größten Strömungsgeschwindigkeit festgelegt. Die Schallgeschwindigkeit der reinen Flüssigphase definiert dabei die maximale Strömungsgeschwindigkeit, die mit Hilfe der Steuereinrichtung 1 eingestellt werden kann.

Die Erfindung beruht nun auf der Erkenntnis, dass innerhalb des Zwei-Phasen-Gemischs 5 die Schallgeschwindigkeit eine starke Abhängigkeit vom Massenanteil der Gasphase zeigt, so dass bereits ein vergleichsweise kleiner Massenanteil der Gasphase zu einer deutlichen Herabsetzung der Schallgeschwindigkeit führt. Die minimal einstellbare Geschwindigkeit definiert dann die minimale Strömungsgeschwindigkeit, die mit Hilfe der Steuereinrichtung 1 eingestellt werden kann.

Um eine gewünschte Strömungsgeschwindigkeit in der Flüssigkeitsströmung einstellen zu können, ist die Steuereinrichtung 1 außerdem mit einer Steuerung 13 ausgestattet, die über eine entsprechende Steuerleitung 14 die Erzeugeranordnung 4 betätigt. Die Steuerung 13 ist dabei so ausgestaltet, dass sie in Abhängigkeit der jeweils gewünschten Strömungsgeschwindigkeit den Massenanteil der Gasphase im Zwei-Phasen-Gemisch 5 variieren kann. Beispielsweise ist die Abhängigkeit der Schallgeschwindigkeit des Zwei-Phasen-Gemischs 5 vom Massenanteil der Gasphase in Form einer Kennlinie oder einer Berechnungsformel in einem Speicher der Steuerung 13 hinterlegt. Ebenfalls kann ein Regelkreis vorgesehen sein, dessen Regelgröße der Massenanteil der Gasphase und dessen Führungsgröße die Strömungsgeschwindigkeit ist. Durch einen Soll-Ist-Vergleich der Strömungsgeschwindigkeit lässt sich dann ermitteln, ob zur Reduzierung der Strömungsgeschwindigkeit mehr Gas in die Flüssigkeit eingebracht werden muss oder ob zur Erhöhung der Strömungsgeschwindigkeit die Einleitung der Gasphase in die Flüssigphase gedrosselt werden muss.

Die Ausführungsform der Steuereinrichtung 1 gemäß Fig. 1 wird im folgenden auch mit 1_{I} bezeichnet und arbeitet wie folgt:

Die Steuereinrichtung 1_{I} kann beispielsweise im Einstellen einer vorbestimmten Strömungsgeschwindigkeit verwendet werden. Hierzu wird von der Steuerung 13 die Erzeugeranordnung 4 so angesteuert, dass sich in der Zwei-Phasen-Zone 6 ein Zwei-Phasen-Gemisch 5 einstellt, dessen Schallgeschwindigkeit der gewünschten, einzustellenden Strömungsgeschwindigkeit entspricht. Die in der Hydraulildeitung 3 transportierte Flüssigkeitsströmung kann dann die eingestellte Strömungsgeschwindigkeit nicht mehr übersteigen, da diese im Zwei-Phasen-Gemisch 5 der Schallgeschwindigkeit entspricht, so dass zur Übersteigung der Schallgrenze extrem hohe Stosswiderstände überwunden werden müssten.

Bei der Ausführungsform gemäß Fig. 1 wird das Zwei-Phasen-Gemisch 5 in der Querschnittsverengung 7 erzeugt, das heißt, die Zwei-Phasen-Zone 6 befindet sich in der Querschnittsverengung 7. Auf diese Weise arbeitet die Steuereinrichtung 1_{I} unabhängig von der Strömungsrichtung, die in den Fig. 1 und 2 durch einen Pfeil symbolisiert und mit 15 bezeichnet ist. Da in der Querschnittsverengung 7 die größte Strömungsgeschwindigkeit innerhalb des Leitungsabschnitts 2 herrscht, kann dort besonders einfach mit Hilfe des Zwei-Phasen-Gemischs 5 die Schallgeschwindigkeit herabgesetzt werden.

Die Steuereinrichtung 1_{I} kann auch zur Dämpfung oder Glättung bzw. Eliminierung von Druckpulsationen verwendet werden. In einem Druckpuls herrscht eine lokal überhöhte Strömungsgeschwindigkeit, die bei entsprechend eingestelltem Zwei-Phasen-Gemisch 5 oberhalb der Schallgeschwindigkeit des Zwei-Phasen-Gemischs 5 liegt. Dementsprechend kann eine ankommende Druckwelle die Zwei-Phasen-Zone 6 nicht oder nur stark gedämpft durchdringen. Über die Steuerung 13 kann dabei mit Hilfe des Massenanteils der Gasphase im Zwei-Phasen-Gemisch 5 eine Grenzgeschwindigkeit eingestellt werden, bis zu der Schwankungen der Strömungsgeschwindigkeit toleriert werden können und nur Druckpulse mit höherer Geschwindigkeit gedämpft werden.

Wenn mit der Steuereinrichtung 1_{I} gleichzeitig die Strömungsgeschwindigkeit innerhalb der Hydraulikleitung 3 gesteuert wird, führt jeder Druckpuls zu einer Geschwindigkeit, die oberhalb der Schallgeschwindigkeit des Zwei-Phasen-Gemischs 5 liegt, so dass jeder Druckpuls bedämpft bzw. eliminiert werden kann. Die Glättung bzw. Bedämpfung oder Eliminierung von Druckpulsen ist bei der Ausführungsform der Steuereinrichtung 1_{I} gemäß Fig. 1 unabhängig von der jeweiligen Strömungsrichtung, da die Zwei-Phasen-Zone 6 in der Querschnittsverengung 7 angeordnet ist

Im folgenden wird die Funktionsweise der in Fig. 2 dargestellten Ausführungsform der Steuereinrichtung 1 näher erläutert, die dazu mit 1_{II} bezeichnet wird:

Die wesentlichen Unterschiede der Steuereinrichtung 1_{II} gemäß Fig. 2 im Hinblick auf die Steuereinrichtung 1_{I} gemäß Fig. 1 sind zum einen das Auseinanderfallen von Zwei-Phasen-Zone 6 und Querschnittsverengung 7 und zum anderen der im Hinblick auf die Querschnittsverengung 7 vergrößerte Querschnitt der Zwei-Phasen-Zone 6. Durch diese Bauweise arbeitet die Steuereinrichtung 1_{II} strömungsrichtungsabhängig.

Beispielsweise stellt die Steuerung 13 einen bestimmten Massenanteil der Gasphase im Zwei-Phasen-Gemisch 5 ein. Dies führt zu einer bestimmten Schallgeschwindigkeit, welche die maximale Strömungsgeschwindigkeit in der Hydraulikleitung 3 definiert.

Bei der in Fig. 2 eingetragenen Strömungsrichtung 15 (von links nach rechts) befindet sich das Zwei-Phasen-Gemisch 5 in der Zwei-Phasen-Zone 6 und aufgrund der Mitnahmewirkung der Strömung auch stromab davon in der Hydraulikleitung 3. Bei einer Gegenströmungsrichtung (von rechts nach links), die in Fig. 2 durch einen Pfeil 16 symbolisiert ist, gelangt durch die Mitnahmewirkung der Strömung Zwei-Phasen-Gemisch 5 von der Zwei-Phasen-Zone 6 in die Querschnittverengung 7. Da in der Querschnittsverengung 7 eine deutlich höhere Strömungsgeschwindigkeit herrscht als in der Zwei-Phasen-Zone 6 kann die Strömung dort relativ rasch die Schallgeschwindigkeit des Zwei-Phasen-Gemischs 5 erreichen. Dies hat zur Folge, dass in der einen Strömungsrichtung 15, bei der die Zwei-Phasen-Zone 6 stromab der Querschnittsverengung 7 angeordnet ist, deutlich größere Strömungsgeschwindigkeiten den Leitungsabschnitt 2 passieren können als in der Gegenströmungsrichtung 16, bei welcher sich die Zwei-Phasen-Zone 6 stromauf der Querschnittsverengung 7 befindet. Die Strömungsgeschwindigkeit, ab welcher die Steuereinrichtung 1_{II} in der Gegenströmungsrichtung 16 reflektiert bzw. sperrt, kann auch als Sperrgeschwindigkeit bezeichnet werden, während die in der Strömungsrichtung 15 gerade noch durchlässige Strömungsgeschwindigkeit als Maximalgeschwindigkeit bezeichnet werden kann.

Zwar kann die Steuereinrichtung 1_{II} gemäß Fig. 2 grundsätzlich auch zum Einstellen der Strömungsgeschwindigkeit genutzt werden, wobei sich dann für die beiden Strömungsrichtungen 15, 16 unterschiedliche Strömungsgeschwindigkeiten ergeben. Bevorzugt wird eine derartige Steuerungseinrichtung 1_{II} jedoch dazu verwendet, Druckpulse in der einen Strömungsrichtung 15 zu ermöglichen und in der Gegenströmungsrichtung 16 zu stoppen bzw. zu reflektieren. Hierzu wird der Massenanteil der Gasphase im Zwei-Phasen-Gemisch 5 so eingestellt, dass Druckpulse bis zu einer zulässigen Amplitude in der einen Strömungsrichtung 15 in der Zwei-Phasen-Zone 6 eine Strömungsgeschwindigkeit erreichen, die unterhalb der Schallgeschwindigkeit des Zwei-Phasen-Gemischs 5 liegt. Druckimpulse, die in der Gegenströmungsrichtung 16 ankommen, führen wieder zu einer Mitnahme des Zwei-Phasen-Gemischs 5 in die Querschnittsverengung 7. Durch die in der Querschnittsverengung 7 deutlich erhöhte Strömungsgeschwindigkeit wird dort die Schallgeschwindigkeit des Zwei-Phasen-Gemischs 5 rasch erreicht, so dass der Druckimpuls gestoppt bzw. reflektiert wird. Dabei kann die Amplitude des in der Gegenstromrichtung 16 ankommenden Druckimpulses auch kleiner sein als die Amplitude eines Druckimpulses, der in der Strömungsrichtung 15 ankommt und quasi ungehindert den Leitungsabschnitt 2 passieren kann.

Fig. 3 zeigt exemplarisch eine mögliche Anwendung der erfindungsgemäßen Steuereinrichtungen 1 bzw. 1_{I} und 1_{II}. Entsprechend Fig. 3 umfasst ein Kraftstoffeinspritzsystem 17 eine Kraftstoffpumpe 18, die über eine Zuführungsleitung 19 eine Hochdruckleitung 20 mit Kraftstoff versorgt. Von der Hochdruckleitung 20 gehen einzelne Abzweigleitungen 21 zu Kraftstoffinjektoren 22 ab, die jeweils einem Zylinder einer nicht dargestellten Brennkraftmaschine zugeordnet sind. Da alle Injektoren 22 an dieselbe Hochdruckleitung 20 angeschlossen sind, handelt es sich hier um ein sogenanntes "Common-Rail-System".

Bei einem derartigen "Common-Rail-System" kommt es über die gemeinsame Hochdruckleitung 20 zu Wechselwirkungen zwischen den einzelnen Injektoren 22. Beispielsweise führt das Öffnen und insbesondere das Schließen eines Injektors 22 zu einer Druckwelle, die sich über die Abzweigleitung 21 in die Hochdruckleitung 20 fortpflanzt und über die anderen Abzweigleitungen 21 zu den anderen Injektoren 22 gelangt. Da die einzelnen Injektoren 22 unterschiedlichen Zylindern der Brennkraftmaschine zugeordnet sind, arbeiten sie insoweit unabhängig voneinander, jedenfalls nicht simultan. Dementsprechend führen die genannten Druckpulse zu unerwünschten Druckschwankungen an den Injektoren 22, die sich nachteilig auf die Präzision des Einspritzvorgangs zum Beispiel hinsichtlich der Einspritzmenge und/oder des Einspritzdrucks, auswirken. Des Weiteren kann auch die Kraftstoffpumpe 18, insbesondere im Zusammenspiel mit einem Druckregelventil 23, Druckimpulse erzeugen, die sich über die Versorgungsleitung 19 bis in die Hochdruckleitung 20 fortpflanzen und über diese zu den einzelnen Injektoren 22 gelangen.

Mit Hilfe der erfindungsgemäßen Steuereinrichtung 1 ist es nun möglich, innerhalb eines derartigen "Common-Rail-Systems" einen pulsationsfreien Systembereich auszubilden, der in Fig. 3 durch einen mit unterbrochener Linie dargestellten Rahmen symbolisiert und mit 24 bezeichnet ist. Hierzu wird in der Versorgungsleitung 19 stromab der Anschlussstelle des Druckregelventils 23 eine Steuereinrichtung 1_{I} gemäß der in Fig. 1 gezeigten Ausführungsform eingesetzt. Wie oben erläutert, kann diese Steuereinrichtung 1_{I} so betrieben werden, dass sie Druckimpulse nicht oder zumindest stark gedämpft zur Hochdruckleitung 20 durchlässt. Des Weiteren werden in den Abzweigleitungen 21 jeweils Steuereinrichtungen 1_{II} entsprechend der in Fig. 2 gezeigten Ausführungsform angeordnet. Diese können, wie oben erläutert. so betrieben werden, dass sie zwar Druckpulse von der Hochdruckleitung 20 zum jeweiligen Injektor 22 durchlassen, jedoch in der Gegenströmung orientierte Drockimpulse im wesentlichen sperren oder reflektieren. Auf diese Weise wird eine Wechselwirkung zwischen den einzelnen Injektoren 22 über die Hochdruckleitung 20 im wesentlichen ausgeschlossen. Ebensowenig können sich impulsartige Druckschwankungen über die Versorgungsleitung 9 auf die Hochdruckleitung 20 auswirken.

Neben der hier geschilderten, besonderen Anwendung der erfindungsgemäßen Steuereinrichtung 1 sind auch beliebige andere Anwendungsgebiete möglich, beispielsweise bei einem Semolenkungssystem eines Kraftfahrzeugs. Bei derartigen Servolenkungssystemen wird aus Geräuschgründen regelmäßig ein Dehnschlauch oder ein entsprechender Pulsationsdämpfer verwendet. Zur Druckpulsationsdämpfung und/oder - reflektion können hier Steuereinrichtungen 1 der Erfindung zur Anwendung kommen, um z. B. einen solchen Dehnschlauch bzw. einen solchen Pulsationsdämpfer zu ersetzen. Eine andere Anwendung kann beispielsweise auch in einem Bremssystems eines Kraftfahrzeugs gesehen werden. Auch dort können unerwünschte Druckpulsationen auftreten, die mit Hilfe der erfindungsgemäßen Steuereinrichtung 1 gedämpft bzw. eliminiert werden können.

### Bezugszeichenliste

- 1: Steuereinrichtung
- 1_{I}: Steuereinrichtung gemäß Fig. 1
- 1ₙ: Steuereinrichtung gemäß Fig. 2
- 2: Leitungsabschnitt
- 3: Hydraulikleitung
- 4: Erzeugeranordnung
- 5: Zwei-Phasen-Gemisch
- 6: Zwei-Phasen-Zone
- 7: Querschnittsverengung
- 8: Bypassraum
- 9: Bypass
- 10: Heizeinrichtung
- 11: Gasphase
- 12: gasdurchlässige Wandung
- 13: Steuerung
- 14: Steuerleitung
- 15: Strömungsrichtung
- 16: Gegenströmungsrichtung
- 17: Kraftstoffeinspritzsystem
- 18: Kraftstoffpumpe
- 19: Versorgungsleitung
- 20: Hochdruckleitung
- 21: Abzweigleitung
- 22: Injektor
- 23: Druckregelventil
- 24: pulsationsfreier Systembereich

## Patentansprüche

1. Einrichtung zum Steuern der Strömungsgeschwindigkeit einer Flüssigkeitsströmung in einer Hydraulikleitung (3),
- mit einem von der Flüssigkeit durchströmbaren Leitungsabschnitt (2),
- mit einer Anordnung (4) zur Erzeugung eines homogenen Zwei-Phasen-Gemischs (5) in der Flüssigkeit im Leitungsabschnitt (2).

2. Steuereinrichtung nach Anspruch 1,
**dadurch gekennzeichnet,**
**dass** eine Steuerung (13) vorgesehen ist, die so ausgestaltet ist, dass sie die jeweils gewünschte Strömungsgeschwindigkeit im Leitungsabschnitt (2) durch Variieren des Massenanteils der Gasphase im Zwei-Phasen-Gemisch (5) einstellt.

3. Steuereinrichtung nach Anspruch 1 oder 2,
**dadurch gekennzeichnet,**
**dass** der Leitungsabschnitt (2) innerhalb der Hydraulikleitung (3) eine definierte Querschnittsverengung (7) bildet und/oder eine solche aufweist.

4. Steuereinrichtung nach Anspruch 3,
**dadurch gekennzeichnet,**
**dass** die Anordnung (4) zur Erzeugung des homogenen Zwei-Phasen-Gemischs (5) das Zwei-Phasen-Gemisch (5) im Bereich der Querschnittsverengung (7) erzeugt.

5. Steuereinrichtung nach Anspruch 3,
**dadurch gekennzeichnet,**
- **dass** der Leitungsabschnitt (2) benachbart zur Querschnittsverengung (7) eine Zwei-Phasen-Zone (6) mit erweitertem Querschnitt aufweist,
- **dass** Anordnung (4) zur Erzeugung des homogenen Zwei-Phasen-Gemischs (5) das Zwei-Phasen-Gemisch (5) im Bereich der Zwei-Phasen-Zone (6) erzeugt.

6. Steuereinrichtung nach Anspruch 5,
**dadurch gekennzeichnet,**
**dass** die Zwei-Phasen-Zone (5) und die Querschnittsverengung (7) so aufeinander abgestimmt sind, und der Massenanteil der Gasphase im Zwei-Phasen-Gemisch (5) so eingestellt ist, dass die Flüssigkeitsströmung in einer Strömungsrichtung (15), bei welcher die Zwei-Phasen-Zone (6) stromab der Querschnittsverengung (7) angeordnet ist, den Leitungsabschnitt (2) bis zu einer vorgegebenen oder einstellbaren Maximalgeschwindigkeit im wesentlichen ungehindert durchströmen kann und in einer Gegenströmungsrichtung (16), bei welcher die Zwei-Phasen-Zone (6) stromauf der Querschnittsverengung (7) angeordnet ist, den Leitungsabschnitt (2) bis zu einer vorgegebenen oder einstellbaren Sperrgeschwindigkeit, die kleiner ist als die Maximalgeschwindigkeit, im wesentlichen ungehindert durchströmen kann.

7. Steuereinrichtung nach einem der Ansprüche 1 bis 6,
**dadurch gekennzeichnet,**
**dass** die Anordnung (4) zur Erzeugung des homogenen Zwei-Phasen-Gemischs (5) die Gasphase (11) durch eine gasdurchlässige, insbesondere perforierte oder poröse, Wandung (12) des Leitungsabschnitts (2) in die Flüssigkeit einbringt.

8. Steuereinrichtung nach einem der Ansprüche 1 bis 7,
**dadurch gekennzeichnet,**
**dass** die Anordnung (4) zur Erzeugung des homogenen Zwei-Phasen-Gemischs (5) die Gasphase (11) aus einem von der Flüssigkeitsströmung abgezweigten Teilstrom erzeugt.

9. Steuereinrichtung nach Anspruch 8,
**dadurch gekennzeichnet,**
**dass** die Anordnung (4) zur Erzeugung des homogenen Zwei-Phasen-Gemischs (5) die Gasphase (11) mittels Widerstandsheizung und/oder Mikrowellen und/oder Ultraschall erzeugt.

10. Verfahren zum Steuern der Strömungsgeschwindigkeit einer Flüssigkeitsströmung in einer Hydraulikleitung (3), bei dem in der Flüssigkeit in einem von der Flüssigkeit durchströmbaren Leitungsabschnitt (2) ein homogenes Zwei-Phasen-Gemisch (5) erzeugt wird.

11. Steuerverfahren nach Anspruch 10,
**dadurch gekennzeichnet,**
**dass** die jeweilige Strömungsgeschwindigkeit im Leitungsabschnitt (2) durch Variieren des Massenanteils der Gasphase im Zwei-Phasen-Gemisch (5) eingestellt wird.

12. Steuerverfahren nach Anspruch 10 oder 11,
**dadurch gekennzeichnet,**
**dass** das Zwei-Phasen-Gemisch (5) im Bereich einer Querschnittsverengung (7) erzeugt wird, welche der Leitungsabschnitt (2) aufweist oder welche der Leitungsabschnitt (2) innerhalb der Hydraulikleitung (3) bildet.

13. Steuerverfahren nach Anspruch 10 oder 11,
**dadurch gekennzeichnet,**
**dass** das Zwei-Phasen-Gemisch (5) im Bereich einer Zwei-Phasen-Zone (6) erzeugt wird, die im Leitungsabschnitt (2) benachbart zu einer Querschnittsverengung (7) angeordnet ist, wobei die Querschnittsverengung (7) im Leitungsabschnitt (2) gebildet oder innerhalb der Hydraulikleitung (3) durch den Leitungsabschnitt (2) gebildet ist.

14. Verwendung einer Steuereinrichtung (1) nach einem der Ansprüche 1 bis 9,
- in einem Kraftstoffeinspritzsystem (17) für ein Kraftfahrzeug, und/oder
- in einem Servolenkungssystem für ein Kraftfahrzeug, und/oder
- in einem Bremssystem für ein Kraftfahrzeug, und/oder
- zur Glättung von Druckpulsationen, und/oder
- zur richtungsabhängigen Reflektion von Druckpulsationen.

## Claims

1. Device for controlling the flow speed of a liquid flow in a hydraulic line (3),
- having a line section (2) through which the liquid can flow,
- having an arrangement (4) for generating a homogeneous two-phase mixture (5) in the liquid in the line section (2).

2. Control device according to Claim 1,
**characterized**
**in that** a controller (13) is provided which is designed so as to set the in each case desired flow speed in the line section (2) by varying the mass proportion of the gas phase in the two-phase mixture (5).

3. Control device according to Claim 1 or 2,
**characterized**
**in that** the line section (2) forms and/or has a defined cross-sectional constriction (7) within the hydraulic line (3).

4. Control device according to Claim 3,
**characterized**
**in that** the arrangement (4) for generating the homogeneous two-phase mixture (5) generates the two-phase mixture (5) in the region of the cross-sectional constriction (7).

5. Control device according to Claim 3,
**characterized**
- **in that** the line section (2) has, adjacent to the cross-sectional constriction (7), a two-phase zone (6) with a widened cross section,
- **in that** the arrangement (4) for generating the homogeneous two-phase mixture (5) generates the two-phase mixture (5) in the region of the two-phase zone (6).

6. Control device according to Claim 5,
**characterized**
**in that** the two-phase zone (5) and the cross-sectional constriction (7) are co-ordinated with one another in such a way, and the mass proportion of the gas phase in the two-phase mixture (5) is set in such a way, that the liquid flow can flow through the line section (2) substantially unhindered up to a predefined or settable maximum speed in one flow direction (15) in which the two-phase zone (6) is arranged downstream of the cross-sectional constriction (7), and can flow through the line section (2) substantially unhindered up to a predefined or settable blocking speed, which is smaller than the maximum speed, in a counterflow direction (16) in which the two-phase zone (6) is arranged upstream of the cross-sectional constriction (7).

7. Control device according to one of Claims 1 to 6,
**characterized**
**in that** the arrangement (4) for generating the homogeneous two-phase mixture (5) introduces the gas phase (11) into the liquid through a gas-permeable, in particular perforated or porous, wall (12) of the line section (2).

8. Control device according to one of Claims 1 to 7,
**characterized**
**in that** the arrangement (4) for generating the homogeneous two-phase mixture (5) generates the gas phase (11) from a partial flow which is branched off from the liquid flow.

9. Control device according to Claim 8,
**characterized**
**in that** the arrangement (4) for generating the homogeneous two-phase mixture (5) generates the gas phase (11) by means of resistance heating and/or microwaves and/or ultrasound.

10. Method for controlling the flow speed of a liquid flow in a hydraulic line (3), in which method a homogeneous two-phase mixture (5) is generated in the liquid in a line section (2) through which the liquid can flow.

11. Control method according to Claim 10,
**characterized**
**in that** the respective flow speed in the line section (2) is set by varying the mass proportion of the gas phase in the two-phase mixture (5).

12. Control method according to Claim 10 or 11,
**characterized**
**in that** the two-phase mixture (5) is generated in the region of a cross-sectional constriction (7) which the line section (2) has or which the line section (2) forms within the hydraulic line (3).

13. Control method according to Claim 10 or 11,
**characterized**
**in that** the two-phase mixture (5) is generated in the region of a two-phase zone (6) which is arranged in the line section (2) adjacent to a cross-sectional constriction (7), with the cross-sectional constriction (7) being formed in the line section (2) or being formed within the hydraulic line (3) by the line section (2).

14. Use of a control device (1) according to one of Claims 1 to 9,
- in a fuel injection system (17) for a motor vehicle, and/or
- in a servo steering system for a motor vehicle, and/or
- in a brake system for a motor vehicle, and/or
- for smoothing pressure pulses, and/or
- for direction-dependent reflection of pressure pulses.

## Revendications

1. Installation pour commander la vitesse d'écoulement d'un flux de liquide dans une conduite hydraulique (3), comprenant :
- un segment de conduite (2) traversé par le liquide,
- un dispositif (4) pour générer un mélange à deux phases (5), homogène dans le liquide dans le segment de conduite (2).

2. Installation de commande selon la revendication 1,
**caractérisée par**
une commande (13) conçue pour régler la vitesse d'écoulement souhaitée dans le segment de conduite (2) en variant la composante massique de la phase gazeuse du mélange à deux phases (5).

3. Installation de commande selon la revendication 1 ou 2,
**caractérisée en ce que**
le segment de conduite (2) forme un rétrécissement de section, défini (7) dans la conduite hydraulique (3) et/ou comporte un tel rétrécissement.

4. Installation de commande selon la revendication 3,
**caractérisée en ce que**
le dispositif (4) pour générer le mélange biphase (5), homogène, crée ce mélange biphase (5) dans la zone du rétrécissement de section (7).

5. Installation de commande selon la revendication 3,
**caractérisée en ce que**
le segment de conduite (2) présente au voisinage du rétrécissement de section (7) une zone à deux phases (6) à section élargie,
le dispositif (4) qui génère le mélange biphase (5), homogène, génère ce mélange biphase (5) dans la plage de la zone à deux phases (6).

6. Installation de commande selon la revendication 5,
**caractérisée en ce que**
la zone à deux phases (6) et le rétrécissement de section (7) sont accordés l'un par rapport à l'autre, et la teneur massique de la phase gazeuse dans le mélange biphase (5) est réglée pour que le flux de liquide dans une direction découlement (15) pour laquelle la zone à deux phases (5) est en aval du rétrécissement de section (7) puisse passer le segment de conduite (2) pratiquement sans être retenu jusqu'à une vitesse maximale prédéfinie ou réglable et dans la direction de flux opposée (16) pour laquelle la zone à deux phases (6) est en amont du rétrécissement de section (7), le segment de conduite (2) peut être traversé pratiquement sans difficulté jusqu'à une vitesse de blocage prédéfinie ou réglable, inférieure à la vitesse maximale.

7. Installation de commande selon l'une des revendications 1 à 6,
**caractérisée en ce que**
le dispositif (4) pour générer le mélange biphase (5) homogène introduit la phase gazeuse (11) dans le liquide à travers une paroi (12) du segment de conduite (2) perméable aux gaz, notamment une paroi perforée ou poreuse.

8. Installation de commande selon l'une des revendications 1 à 7,
**caractérisée en ce que**
le dispositif (4) pour générer le mélange biphase (5) homogène génère la phase gazeuse (11) par un flux partiel pris sur le flux de liquide.

9. Installation de commande selon la revendication 8,
**caractérisée en ce que**
le dispositif (4) pour générer le mélange biphase (5) homogène génère la phase gazeuse (11) par un chauffage par résistance et/ou micro-ondes et/ou ultrasons.

10. Procédé de commande de la vitesse d'écoulement d'un flux de liquide dans une conduite hydraulique (3) selon lequel on génère dans le liquide, un mélange biphase (5) homogène dans un segment de conduite (2) traversé par le liquide.

11. Procédé de commande selon la revendication 10,
**caractérisé en ce qu'**
on règle la vitesse d'écoulement respective dans le segment de conduite (2) en variant la teneur massique de la phase gazeuse du mélange biphase (5).

12. Procédé de commande selon la revendication 10 ou 11,
**caractérisé en ce que**
dans la région de rétrécissement de section (7) on génère le mélange biphase (5), cette région comprenant le segment de conduite (2) ou forme le segment de conduite (2) dans la conduite hydraulique (3).

13. Procédé de commande selon la revendication 10 ou 11,
**caractérisé en ce qu'**
on génère le mélange biphase (5) dans une région d'une zone à deux phases (6) prévue dans le segment de conduite (2) au voisinage d'un rétrécissement de section (7), étant formé dans le segment de conduite (2) ou dans la conduite hydraulique (3) par le segment de conduite (2).

14. Application d'une installation de commande (1) selon l'une des revendications 1 à 9 à
- un système d'injection de carburant (17) pour un véhicule automobile et/ou
- dans un système de direction assistée d'un véhicule automobile et/ ou
- dans un système de frein d'un véhicule automobile et/ou
- pour lisser les pulsations de pression et/ou
- pour réfléchir les pulsations de pression en fonction de la direction.
